# FASCICULE DE BREVET EUROPEEN

(11) **EP 3 263 744 B1**
(45) Date de publication et mention de la délivrance du brevet: **15.05.2019**
(21) Numéro de dépôt: 17179196.5
(22) Date de dépôt: 30.06.2017
(51) Int. Cl.: C25C 1/20, C25C 3/34, H01M 8/008, H01M 4/92

(54) **PROCÉDÉ DE RÉCUPÉRATION DE PLATINE, PAR VOIE ÉLECTROCHIMIQUE, À PARTIR D'UN MATÉRIAU DANS LEQUEL IL EST CONTENU**
ELEKTROCHEMISCHES RÜCKGEWINNUNGSVERFAHREN VON PLATIN MITHILFE EINES MATERIALS, IN DEM ES ENTHALTEN IST
PROCESS FOR THE RECOVERY OF PLATINUM, ELECTROCHEMICALLY, FROM A MATERIAL WHICH CONTAINS SAME

(30) Priorité: 01.07.2016 FR 1656293
(43) Date de publication de la demande: 03.01.2018
(73) Titulaire: Commissariat à l'énergie atomique et aux énergies alternatives, 75015 Paris (FR); Université de Lorraine, 54052 Nancy Cedex (FR)
(72) Inventeur: BILLY, Emmanuel, 38100 GRENOBLE (FR); BALVA, Maxime, 57070 METZ (FR); LECLERC, Natalie, 57220 BIONVILLE SUR NIED (FR); LEGEAI, Sophie, 57000 METZ (FR); MEUX, Eric, 57420 POURNOY-LA-GRASSE (FR)
(74) Mandataire: Brevalex

(56) Documents cités:
- WO-A1-01/13379
- WO-A1-2006/074523
- WO-A1-2016/054265
- JP-A- 2011 122 242
- DATABASE WPI Week 201644 Thomson Scientific, London, GB; AN 2016-387733 XP002767599, -& KR 101 629 918 B1 (KOREA ATOMIC ENERGY RES [KR]) 13 juin 2016 (2016-06-13)

## Description

### DOMAINE TECHNIQUE

La présente invention se rapporte à un procédé de récupération de platine à partir d'un matériau dans lequel ce platine est contenu.

Elle se rapporte plus particulièrement à un procédé de récupération, par voie électrochimique, du platine à partir d'un tel matériau, ce procédé de récupération comprenant une étape d'électrolyse conduite dans une solution électrolytique particulière.

Le matériau à partir duquel peut être récupéré le platine peut notamment être une électrode de piles à combustible comprenant ledit platine.

La présente invention trouve notamment application dans le recyclage de piles à combustibles arrivées en fin de vie, en particulier de piles à combustible à membrane échangeuse de protons, en vue de valoriser le platine présent dans ces dernières.

### ÉTAT DE LA TECHNIQUE ANTÉRIEURE

Les piles à combustible à membrane échangeuse de protons (en anglais, Proton Exchange Membrane Fuel Cells et abrégé PEMFC) transforment l'énergie chimique libérée durant la réaction électrochimique du dihydrogène (H₂) et du dioxygène (O₂) en énergie électrique.

Les piles du type PEMFC sont constituées par un empilement de cellules électrochimiques élémentaires qui sont séparées, les unes des autres, par des plaques bipolaires. Ces cellules électrochimiques élémentaires, également appelées assemblages membrane électrodes et abrégées AME, sont formées d'une membrane disposée entre deux électrodes, cette membrane faisant fonction d'électrolyte en bloquant le passage des électrons et en laissant passer les ions H⁺. Les électrodes de ces AME comprennent un catalyseur, généralement à base de métaux nobles tels que le platine, permettant de catalyser la réaction d'oxydation du dihydrogène.

Si l'on considère l'ensemble des composants formant une pile à combustible du type PEMFC, le coût du platine représente à lui seul 25 % du coût global d'une telle pile.

Aussi, et pour que le coût du platine ne constitue pas un frein au développement de la technologie des piles du type PEMFC, il y a un fort intérêt à mettre en place un procédé efficace et économiquement viable pour récupérer le platine et, notamment, le platine contenu dans les AME des piles à combustible en fin de vie et/ou les rebuts de production.

À ce jour, la récupération du platine présent dans des systèmes catalytiques est assurée, à l'échelle industrielle, soit par des procédés pyrométallurgiques, soit par des procédés hydrométallurgiques.

La récupération du platine par la voie pyrométallurgique consiste à porter à très haute température, dans un four à arc plasma, un mélange comprenant ce système catalytique, préalablement broyé, et un fondant, ces températures étant typiquement comprises entre 1400 °C et 1700 °C.

Si les procédés pyrométallurgiques sont efficaces pour récupérer le platine, ils présentent l'inconvénient de consommer beaucoup d'énergie et de conduire au dégagement de quantités importantes de gaz qui sont nocifs pour l'homme et l'environnement. En particulier, ces procédés pyrométallurgiques conduisent à la formation de dioxyde de carbone (CO₂) mais peuvent également conduire à la formation de gaz toxiques. Parmi ces gaz toxiques, on peut citer le dioxyde de soufre (SO₂) ou encore le fluorure d'hydrogène (HF), ces deux gaz provenant de la combustion de la membrane de l'AME, lorsque celle-ci est réalisée en un polymère perfluorocarboné et comprenant des groupements sulfonés, tel que le polymère connu sous la dénomination Nafion™ et disponible auprès de la société DuPont de Nemours.

De surcroît, les procédés pyrométallurgiques ne permettent pas de valoriser les autres composants qui constituent les AME.

La récupération du platine par la voie hydrométallurgique consiste à mettre en contact le système catalytique, préalablement broyé, avec une solution visant à dissoudre puis à récupérer le platine. La solution qui est reconnue, à ce jour, comme étant la plus efficace pour dissoudre le platine est l'eau régale, qui est formée par un mélange concentré d'acide chlorhydrique et d'acide nitrique dans un rapport 1/3.

S'ils permettent de récupérer, en plus du platine, d'autres composants constitutifs des AME et, notamment, les membranes, le graphite ou les électrodes de carbone, les procédés hydrométallurgiques présentent toutefois des risques importants liés à la mise en oeuvre de mélanges d'acides concentrés et aux traitements ultérieurs des effluents aqueux, ce qui engendre des surcoûts en termes de sécurité industrielle qui peuvent mettre en péril l'équilibre économique de tels procédés.

Pour remédier aux inconvénients des procédés pyrométallurgiques et hydrométallurgiques qui viennent d'être cités, il a été récemment proposé de nouveaux procédés de récupération de platine à partir d'un matériau dans lequel ce platine est contenu par voie électrochimique.

De tels procédés de récupération de platine comprennent une étape d'électrolyse conduite dans une solution électrolytique dans laquelle est immergé un système comprenant une électrode positive et une électrode négative et relié à un dispositif permettant l'application d'une différence de potentiel entre les électrodes positive et négative, le matériau contenant le platine étant disposé sur l'électrode positive et la solution électrolytique comprenant un liquide ionique.

Comme clairement établi par la littérature scientifique, un liquide ionique est un sel possédant une température de fusion inférieure ou égale à 100 °C et souvent même inférieure à la température ambiante. Un liquide ionique, qui est typiquement constitué d'un cation organique et d'un anion organique ou inorganique, se caractérise par une grande stabilité thermique, par une tension de vapeur quasi nulle ainsi que par une très faible inflammabilité, ce qui présente un réel avantage en termes de mise en oeuvre industrielle.

Différentes solutions électrolytiques comprenant toutes un liquide ionique ainsi qu'un composé en solution, tel qu'un sel, ont ainsi été proposées.

La publication de J.-F. Huang et al. ("Heat-Assisted Electrodissolution of Platinum in an Ionic Liquid", Angewandte Communications, 2012, 51, 1684-1688), référencée **[1]** à la fin de la présente description, propose une solution électrolytique comprenant, comme liquide ionique, du chlorure de 1-éthyl-3-méthylimidazolium (abrégé [EMIM][CI]) et, comme sel en solution, du chlorure de zinc ZnCl₂, dans un rapport molaire 75/25. La publication **[1]** rapporte que la mise en oeuvre d'une telle solution électrolytique a permis d'obtenir :
- d'une part, la dissolution anodique du platine métallique constituant l'anode, le produit majoritaire d'anodisation ainsi formé étant constitué par des ions Pt^{+IV} se retrouvant dans la solution électrolytique, et
- d'autre part, la récupération directe et efficace par électrodéposition, à la cathode, de platine métallique par réduction de ces ions Pt⁴⁺ présents dans la solution électrolytique.

La publication de C. Deferm et al. ("Electrochemical dissolution of metallic platinum in ionic liquids", J. Appl. Electrochem., 2013, 43, 797-804), référencée **[2],** propose plusieurs solutions électrolytiques alternatives, présentées comme moins coûteuses que la solution électrolytique de la publication **[1].** Parmi les différentes solutions électrolytiques envisagées par cette publication **[2],** seule la solution électrolytique comprenant du chlorure de choline (abrégé [Ch][Cl]) comme liquide ionique et du chlorure de zinc ZnCl₂ comme sel en solution, dans un rapport molaire 50/50, s'est révélée satisfaisante pour permettre la dissolution anodique du platine et la formation d'un dépôt métallique à la cathode.

Toutefois, la publication **[2]** rapporte que le choix du matériau pour la cathode a une influence, non seulement sur l'efficacité de la dissolution anodique du platine, mais également sur la nature du dépôt métallique à cette cathode. En particulier, il n'est pas envisageable d'utiliser une cathode en acier inoxydable, cet acier inoxydable étant effectivement corrodé par la solution électrolytique [Ch][Cl]/ZnCl₂. Lorsqu'une cathode en oxyde d'indium dopé à l'étain (en anglais, indium tin oxide, abrégé ITO) est utilisée, on obtient bien un dépôt de platine métallique à la cathode, dépôt qui se présente sous la forme de dendrites. Par contre, en présence d'une cathode ITO, le rendement de la dissolution anodique n'est que de 15 % et, de surcroît, on observe un dégagement de gaz dichlore (Cl₂) à l'anode. Lorsqu'une cathode en titane est utilisée, le rendement de dissolution anodique passe à 96 % et aucun dégagement de Cl₂ n'est observé. Mais, dans ce cas, le dépôt métallique obtenu à la cathode est formé par une couche de zinc comprenant des traces minimes de platine métallique, le platine métallique se trouvant quant à lui sous forme de poudre dans la solution électrolytique.

Le document WO 2006/074523 A1, référencé **[3],** se rapporte à un procédé de récupération de platinoïdes au moyen d'une solution électrolytique comprenant un liquide ionique.

Ce document **[3]** décrit que le liquide ionique peut être choisi dans une vaste gamme de liquides ioniques issus de la combinaison de l'un des cations avec l'un des anions suivants :
- pour les cations : tétraalkylammonium, N,N-dialkylimidazolium, N,N-dialkylpyrrolidinium, tétraalkylphosphonium, N-alkylpyridinium et N,N-dialkylpipéridinium ;
- pour les anions : Cl⁻, Br, AlCl₄⁻, BF₄⁻, PF₆⁻, NO₃⁻, alkylsulfonate (RSO₃⁻), alkylthiol (RS⁻), dithiocarbamate (RNCS₂⁻), xanthate (ROCS₂⁻), acétate, trifluoroacétate, sulfonate substitué, tétracyanoborate, alkylsulfate, bis(trifluorométhylsulfonyl)imide (abrégé TFSI), bis(trifluorométhyl)-imide (abrégé TFI) et dicyanamide.

Toutefois, il est à noter que les exemples décrits dans ce document **[3]** en relation avec la dissolution d'une anode en platine et la récupération du platine à la cathode ont tous été conduits avec le méthanesulfonate de 1-méthyl-1-butylpyrrolidi-nium (abrégé [P₁₄][CH₃SO₃]) comme liquide ionique. Ont ainsi été testées des solutions électrolytiques comprenant du [P₁₄][CH₃SO₃] avec du nitrate d'aluminium Al(NO₃)₃, de l'acide hexachloroplatinique hydraté H₂PtCl₆.6H₂O ou encore du nitrate d'ammonium NH₄NO₃ en solution.

En fonction de la nature du composé en solution retenu, la composition du dépôt métallique obtenu à la cathode diffère. Si l'on obtient bien un dépôt de platine métallique sur la cathode de carbone vitreux avec les solutions électrolytiques [P₁₄][CH₃SO₃]/H₂PtCl₆.6H₂O et [P₁₄][CH₃SO₃]/NH₄NO₃, on obtient un dépôt métallique comprenant, comme composant majoritaire, du platine mais comprenant également de l'argent et de l'aluminium avec la solution électrolytique [P₁₄][CH₃SO₃]/Al(NO₃)₃.

Si les procédés de récupération de platine par voie électrochimique tels qu'enseignés par les publications **[1]** à **[3]** permettent de pallier les inconvénients majeurs des procédés pyrométallurgiques et hydrométallurgiques, il n'en demeure pas moins qu'ils ne sont pas entièrement satisfaisants, notamment en termes de reproductibilité et de sécurité environnementale. En particulier, les réactions se produisant à l'anode ne sont pas toujours contrôlées et peuvent produire des gaz particulièrement nocifs pour l'homme et l'environnement tels que des oxydes d'azote, connus sous l'appellation générique de gaz NOx, en particulier lorsque le composé en solution dans la solution électrolytique est constitué par du nitrate d'aluminium ou d'ammonium, comme dans la publication **[3].**

C'est sur la base de ce constat que les Inventeurs se sont donc fixé pour but de fournir un nouveau procédé de récupération de platine à partir d'un matériau dans lequel il est contenu, ce procédé étant toujours réalisé par voie électrochimique au moyen d'une solution électrolytique, mais ne présentant pas les inconvénients relevés ci-dessus avec la mise en oeuvre des solutions électrolytiques proposées dans les publications **[1]** à **[3].**

Ce nouveau procédé de récupération du platine doit, en particulier, pouvoir être mis en oeuvre sans dégradation des composés formant la solution électrolytique et, en particulier, en l'absence de dégagement de gaz nocifs pour l'homme et/ou l'environnement.

Les Inventeurs se sont également donné pour but que ce nouveau procédé de récupération de platine puisse être avantageusement mis en oeuvre pour récupérer, à la cathode et en une seule étape, le platine sous la forme d'un dépôt métallique qui soit le plus pur possible, et non associé à un autre métal, par exemple sous la forme d'un alliage.

Les Inventeurs se sont en outre fixé pour but que ce procédé de récupération de platine puisse être avantageusement mis en oeuvre en limitant les coûts énergétiques ainsi que les coûts de retraitement, tel que celui de la solution électrolytique, permettant ainsi d'envisager favorablement une transposition à une échelle industrielle du procédé de récupération correspondant.

### EXPOSÉ DE L'INVENTION

Ces buts précédemment énoncés ainsi que d'autres sont atteints, en premier lieu, par un procédé de récupération de platine à partir d'un matériau dans lequel il est contenu, ce procédé étant du type précité, c'est-à-dire par un procédé comprenant une étape d'électrolyse conduite dans une solution électrolytique dans laquelle est immergé un système comprenant une électrode positive et une électrode négative et relié à un dispositif permettant de contrôler le potentiel de l'une des deux électrodes positive et négative et, plus avantageusement, de contrôler la différence de potentiel entre les électrodes positive et négative. Le matériau est disposé sur l'électrode positive et la solution électrolytique comprend un premier liquide ionique LI1.

Selon l'invention, LI1 est formé par un premier cation organique et un premier anion inorganique choisi parmi le groupe constitué par les anions halogénures, dicyanamides N(CN)₂⁻ notés DCA⁻ et thiocyanates SCN⁻, et la solution électrolytique comprend, en outre, un deuxième liquide ionique LI2 formé par un deuxième cation organique et un deuxième anion choisi parmi le groupe constitué par les anions bis(trifluorométhanesulfonyl)imide (CF₃SO₂)₂N⁻ noté TFSI⁻, bis(fluorosulfonyl)imide (FSO₂)₂N⁻ noté FSI⁻, trifluorométhanesulfonate ou triflate CF₃SO₃⁻, tris(pentafluoroéthyl)trifluorophosphate noté FAP⁻ et bis(oxalato)borate noté BOB⁻, moyennant quoi on récupère le platine, par électrodéposition de celui-ci, sur l'électrode négative.

Les Inventeurs ont constaté que la mise en oeuvre d'une solution électrolytique comprenant, non plus un seul liquide ionique et un sel en solution tel que ZnCl₂ comme dans les publications **[1]** et **[2],** Al(NO₃)₃ ou encore NH₄NO₃ décrit par le document **[3],** ou par un acide inorganique tel que H₂PtCl₆.6H₂O également décrit par le document **[3],** mais deux liquides ioniques LI1 et LI2 tels que définis ci-dessus, permet de récupérer, en une seule étape et de manière performante et sélective, le platine contenu dans le matériau, ce platine étant récupéré sous forme de platine métallique et non sous forme d'alliage.

De plus, la mise en oeuvre d'une solution électrolytique, lorsqu'elle ne comprend que des liquides ioniques LI1 et LI2, présente un avantage indéniable en termes de mise en oeuvre industrielle, non seulement en raison des propriétés intrinsèques de ces liquides ioniques (grande stabilité thermique, tension de vapeur quasi nulle et très faible inflammabilité), mais également compte tenu des températures impliquées relativement basses, typiquement entre la température ambiante et 200 °C, avantageusement entre la température ambiante et 150 °C et, plus avantageusement encore, entre la température ambiante et 100 °C.

Par ailleurs, le procédé de récupération de platine selon l'invention permet d'optimiser les conditions de sécurité industrielle et de sécurité environnementale, puisque l'on n'observe aucun dégagement de NOx lors de sa mise en oeuvre.

Lorsque l'on indique que la solution électrolytique comprend un premier liquide ionique LI1, on entend que cette solution électrolytique peut aussi bien comprendre un seul premier liquide ionique LI1 qu'un mélange de plusieurs (deux, trois,...) premiers liquides ioniques LI1.

De la même manière, la solution électrolytique peut aussi bien comprendre un seul deuxième ionique LI2 qu'un mélange de plusieurs (deux, trois,...) deuxièmes liquides ioniques LI2.

Dans une variante de l'invention, la solution électrolytique ne comprend pas d'acide inorganique et/ou de sel métallique en solution et ce, pour éviter la formation d'un dépôt du métal correspondant, en plus de celui du platine.

Dans une autre version avantageuse de l'invention, la solution électrolytique ne comprend que des premier(s) et deuxième(s) liquides ioniques LI1 et LI2.

Comme indiqué précédemment, un liquide ionique est formé par un cation et un anion. Du point de vue de la nomenclature, le cation est noté entre crochets et indiqué en premier.

Le premier liquide ionique LI1 est formé par un premier cation organique et un premier anion inorganique choisi parmi le groupe constitué par les anions halogénures⁻, N(CN)₂⁻ et SCN⁻.

Lorsque le premier anion de LI1 est un halogénure, il est avantageusement choisi parmi le groupe constitué par Cl⁻, Br, I⁻ et est, de préférence, Cl⁻.

Le deuxième liquide ionique LI2 est formé par un deuxième cation organique et un deuxième anion, qui peut être organique ou inorganique, ce deuxième anion étant choisi parmi le groupe constitué par TFSI⁻, FSI⁻, CF₃SO₃⁻, FAP⁻ et BOB⁻.

Ce deuxième anion est avantageusement TFSI⁻.

Le premier cation organique du premier liquide ionique LI1, tout comme le deuxième cation organique du deuxième liquide ionique LI2, peuvent être choisis parmi le groupe constitué par un ammonium, un imidazolium, un pyrrolidinium, un phosphonium, un sulfonium et un pipéridinium.

Les premier et deuxième cations organiques peuvent ainsi être choisis parmi le groupe constitué par un tétraalkylammonium, un *N,N*-dialkylimidazolium, un *N,N*-dialkylpyrrolidinium, un tétraalkylphosphonium, un trialkylsulfonium et un *N,N-*dialkylpipéridinium.

Dans une variante avantageuse de l'invention, le premier cation organique et/ou le deuxième cation organique est un imidazolium, un tel cation présentant l'avantage d'être particulièrement stable jusqu'à un potentiel cathodique suffisamment élevé pour le dépôt électrolytique de platine. Par ailleurs, les liquides ioniques à cation imidazolium sont les moins visqueux.

Le premier cation organique et/ou le deuxième cation organique peut être un *N,N*-dialkylimidazolium et, de préférence, le 1-butyl-3-méthylimidazolium.

Dans une variante préférentielle de l'invention, les premier et deuxième cations organiques sont identiques, ce choix de premier et deuxième cations organiques identiques permettant d'augmenter la solubilité du premier liquide ionique LI1 dans le deuxième liquide ionique LI2.

Dans une variante avantageuse de l'invention, la solution électrolytique peut comprendre :
- de 0,5 % mol à 50 % mol du premier liquide ionique LI1, et
- de 50 % mol à 99,5 % mol du deuxième liquide ionique LI2.

Dans une variante avantageuse de l'invention, la concentration molaire du premier liquide ionique LI1, dans la solution électrolytique, est comprise entre 0,01 mol/L et 1,5 mol/L, avantageusement entre 0,02 mol/L et 1,0 mol/L, plus avantageusement entre 0,03 mol/L et 0,5 mol/L et, préférentiellement, entre 0,05 mol/L et 0,3 mol/L.

La solution électrolytique peut, en outre, comprendre un agent desséchant anhydre choisi parmi le groupe constitué par MgSO₄, Na₂SO₄, CaCl₂, CaSO₄, K₂CO₃, NaOH, KOH et CaO.

Dans une variante avantageuse de l'invention, l'électrode positive comprend un matériau choisi parmi le groupe constitué par un métal noble, de l'oxyde d'indium dopé à l'étain, du carbone, de l'acier inoxydable, du tungstène et du titane.

Dans une variante avantageuse de l'invention, l'électrode négative comprend un matériau choisi parmi le groupe constitué par de l'acier inoxydable, du carbone, du titane, de l'aluminium, un métal noble, du tungstène et un oxyde d'indium dopé à l'étain.

Dans ce qui précède, on entend par "métal noble", l'un des huit métaux suivants : l'or, l'argent, le rhodium, l'osmium, le palladium, le ruthénium, l'iridium et le platine.

Dans une variante de l'invention, l'étape d'électrolyse est réalisée sous atmosphère d'argon. Mais rien n'interdit que cette étape d'électrolyse soit réalisée sous une atmosphère non contrôlée telle que l'air.

Dans une variante avantageuse de l'invention, la solution électrolytique mise en oeuvre comprend, en outre, du platine dissous, le rapport des teneurs molaires en LI1 sur platine [LI1]/[Pt] étant avantageusement compris entre 5 et 100.

Dans une variante particulièrement avantageuse de l'invention, ce platine dissous est introduit, dans la solution électrolytique, par dissolution électrochimique préalable de platine, ce platine pouvant indifféremment être issu de platine massif ou d'un matériau contenant du platine, tel qu'un déchet d'électrode.

L'étape d'électrolyse du procédé selon l'invention met en oeuvre un système comprenant une électrode positive et une électrode négative, ce système étant relié à un dispositif permettant de contrôler le potentiel de l'une des deux électrodes positive et négative et, plus avantageusement, de contrôler la différence de potentiel entre les deux électrodes positive et négative.

Dans une variante de l'invention, le dispositif permettant de contrôler la différence de potentiel entre les électrodes positive et négative est une alimentation électrique.

Dans une autre variante de l'invention, le système comprend, en outre, une électrode de référence, et le dispositif permettant le contrôle du potentiel de l'une des deux électrodes positive et négative est un potentiostat.

Dans une variante avantageuse de l'invention, l'étape d'électrolyse est réalisée sous un contrôle potentiostatique alternatif, par l'électrode positive puis par l'électrode négative.

Dans une autre variante avantageuse de l'invention, l'étape d'électrolyse est réalisée en une seule étape, après amorçage de la solution par dissolution de platine.

Dans une variante préférentielle de l'invention, le matériau contenant le platine que l'on cherche à récupérer est porté en électrode.

Une telle électrode peut notamment provenir d'un assemblage membrane électrodes d'une pile à combustible, telle qu'une pile à combustible à membrane échangeuse de protons PEMFC, une telle pile à combustible pouvant être une pile usée ou correspondre à un rebut de fabrication (pile mise au rebut). Dans l'exemple 4 qui suit, on utilisera l'expression de "déchet d'électrode" pour désigner une telle électrode.

L'invention se rapporte ainsi, en second lieu, à un procédé de récupération de platine contenu dans les électrodes d'une pile à combustible, cette pile à combustible comprenant des assemblages membrane électrodes et des plaques bipolaires.

Selon l'invention, ce procédé comprend les étapes successives suivantes :
(a) une étape de séparation des assemblages membrane électrodes et des plaques bipolaires,
(b) une étape de séparation de la membrane et des électrodes de chaque assemblage membrane électrodes séparé à l'étape (a), et
(c) une étape de récupération du platine contenu dans ces électrodes par la mise en oeuvre du procédé de récupération de platine tel que défini ci-dessus, les caractéristiques avantageuses de ce procédé pouvant être prises seules ou en combinaison.

En d'autres termes, le procédé de récupération de platine contenu dans les électrodes d'une telle pile à combustible comprend successivement et dans cet ordre :
(a) une étape de séparation des assemblages membrane électrodes et des plaques bipolaires,
(b) une étape de séparation de la membrane et des électrodes de chaque assemblage membrane électrodes séparé à l'étape (a), et
(c) une étape d'électrolyse conduite dans une solution électrolytique dans laquelle est immergé un système comprenant une électrode positive et une électrode négative et relié à un dispositif permettant de contrôler le potentiel de l'une des deux électrodes positive et négative, avantageusement la différence de potentiel entre les électrodes positive et négative, chacune des électrodes séparées à l'étape (b) et contenant du platine étant disposée sur l'électrode positive et la solution électrolytique comprenant un premier liquide ionique LI1 formé par un premier cation organique et un premier anion inorganique choisi parmi le groupe constitué par les anions halogénures, dicyanamides et thiocyanates, et un deuxième liquide ionique LI2 formé par un deuxième cation organique et un deuxième anion choisi parmi le groupe constitué par les anions TFSI⁻, FSI⁻, CF₃SO₃⁻, FAP⁻ et BOB⁻, moyennant quoi on récupère, sur l'électrode négative, le platine contenu dans chacune des électrodes séparées à l'étape (b).

Dans une variante avantageuse de l'invention, l'électrode positive est constituée par le matériau contenant le platine que l'on cherche à récupérer.

Dans une variante de l'invention, l'électrode positive est constituée par chacune des électrodes de la pile à combustible séparées à l'étape (b).

Dans une variante de l'invention, la pile à combustible est une pile à combustible à membrane échangeuse de protons PEMFC, de préférence une pile usée ou une pile mise au rebut.

D'autres caractéristiques et avantages de l'invention apparaîtront mieux à la lecture du complément de description qui suit, qui se rapporte à des essais de récupération, par dissolution électrochimique et électrodéposition, de platine à partir d'une anode de platine au moyen de solutions électrolytiques de référence (S1 à S3) et de solutions électrolytiques conformes à l'invention (S4 et S5), ainsi qu'à partir d'un déchet d'électrode au moyen de solutions électrolytiques conformes à l'invention (S4, S4', S5 et et S5').

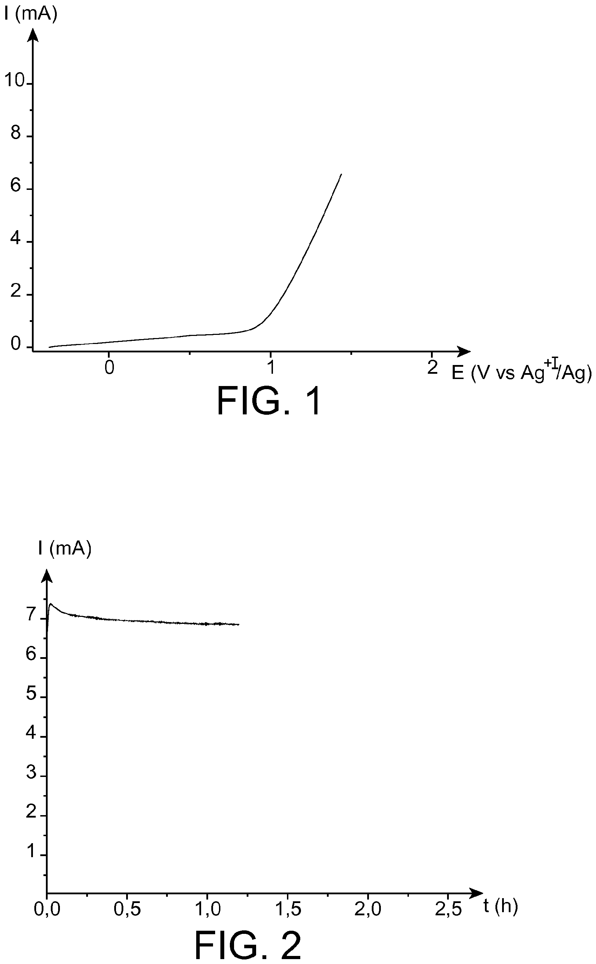

Il est précisé que cette description détaillée, qui se réfère notamment aux figures 1 à 16B telles qu'annexées, n'est donnée qu'à titre d'illustration de l'objet de l'invention et ne constitue en aucun cas une limitation de cet objet.

En particulier, le procédé de récupération de platine décrit ci-dessus et détaillé ci-après permet d'obtenir a *minima* la dissolution électrochimique du platine dans la solution électrolytique.

### BRÈVE DESCRIPTION DES DESSINS

La figure 1 illustre la courbe obtenue en voltampérométrie linéaire anodique traduisant l'évolution de l'intensité (notée I et exprimée en mA) en fonction du potentiel (noté E et exprimé en V par rapport au couple Ag^{+I}/Ag, noté V vs Ag^{+I}/Ag) appliqué au système comprenant l'anode de platine dans la solution électrolytique S2.
La figure 2 illustre la courbe de chronoampérométrie traduisant l'évolution de l'intensité I (en mA) en fonction du temps (noté t et exprimé en h) lorsque le système comprenant l'anode de platine dans la solution électrolytique S2 est soumis à une surtension.
La figure 3 illustre la courbe obtenue en voltampérométrie cyclique traduisant l'évolution de l'intensité I (en mA) en fonction du potentiel E (en V vs Ag^{+I}/Ag) appliqué au système comprenant la cathode de carbone vitreux dans la solution électrolytique S2'.
La figure 4 illustre la courbe obtenue en voltampérométrie linéaire anodique traduisant l'évolution de l'intensité I (en mA) en fonction du potentiel E (en V vs Ag^{+I}/Ag) appliqué au système comprenant l'anode de platine dans la solution électrolytique S4, sous atmosphère contrôlée (argon).
La figure 5 illustre la courbe de chronoampérométrie traduisant l'évolution de l'intensité I (en mA) en fonction du temps t (en h) lorsque le système comprenant l'anode de platine dans la solution électrolytique S4 est soumis à une surtension, sous atmosphère contrôlée (argon).
Les figures 6A correspondent à des clichés MEB du dépôt obtenu dans l'exemple 2, tandis que la figure 6B correspond à l'analyse EDX de ce dépôt.
La figure 7 illustre la courbe obtenue en voltampérométrie linéaire anodique traduisant l'évolution de l'intensité I (en mA) en fonction du potentiel E (en V vs Ag^{+I}/Ag) appliqué au système comprenant l'anode de platine dans la solution électrolytique S5, sous atmosphère non contrôlée (air).
La figure 8 illustre la courbe de chronoampérométrie traduisant l'évolution de l'intensité I (en mA) en fonction du temps t (en h) lorsque le système comprenant l'anode de platine dans la solution électrolytique S5 est soumis à une surtension, sous atmosphère non contrôlée (air).
La figure 9 illustre la courbe obtenue en voltampérométrie linéaire cathodique traduisant l'évolution de la densité de courant J (en mA.cm⁻²) en fonction du potentiel E (en V vs Ag^{+I}/Ag) appliqué au système comprenant la cathode de carbone vitreux dans la solution électrolytique S5, sous atmosphère non contrôlée (air).
Les figures 10A correspondent à des clichés MEB du dépôt obtenu dans l'exemple 3, tandis que la figure 10B correspond à l'analyse EDX de ce dépôt.
La figure 11 illustre la courbe obtenue en voltampérométrie linéaire cathodique traduisant l'évolution de la densité de courant J (en mA.cm⁻²) en fonction du potentiel E (en V vs Ag^{+I}/Ag) appliqué au système comprenant la cathode de carbone vitreux dans la solution électrolytique S4', sous atmosphère contrôlée (argon).
Les figures 12A et 12B correspondent à des clichés MEB et analyse EDX du déchet d'électrode à l'issue de la mise en oeuvre de l'exemple **4.1.**
Les figures 13A et 13B correspondent à des clichés MEB et analyse EDX de la cathode de carbone vitreux à l'issue de la mise en oeuvre de l'exemple **4.1.**
La figure 14 illustre la courbe obtenue en voltampérométrie linéaire cathodique traduisant l'évolution de l'intensité (en mA) en fonction du potentiel E (en V vs Ag^{+I}/Ag) appliqué au système comprenant la cathode de carbone vitreux dans la solution électrolytique S5', sous atmosphère non contrôlée (air).
Les figures 15A et 15B correspondent à des cliché MEB et analyse EDX de l'anode constituée par le déchet d'électrode à l'issue de la mise en oeuvre de l'exemple **4.2.**
Les figures 16A et 16B correspondent à des cliché MEB et analyse EDX de la cathode de carbone vitreux à l'issue de la mise en oeuvre de l'exemple **4.2.**

### EXPOSÉ DÉTAILLÉ DE MODES DE RÉALISATION PARTICULIERS

### EXEMPLE 1 : Solutions électrolytiques constituées par un liquide ionique LI1

### 1.1 Étude de la dissolution électrochimique d'une électrode massive de platine dans ces solutions électrolytiques

Le dispositif électrolytique utilisé dans le cadre de cette étude est constitué par une cellule comprenant trois électrodes :
- une cathode de carbone vitreux en tant que contre-électrode,
- une anode de platine massif porté en électrode de travail, et
- une électrode de référence Ag^{+I}/Ag réalisée en mettant en équilibre un fil d'argent avec une solution de trifluorométhanesulfonate de 1-butyl-3-méthylimidazolium [BMIM][SO₃CF₃], également noté [BMIM][OTf], contenant 10 mmol/L de triflate d'argent AgOTf.

Les trois solutions électrolytiques suivantes, notées S1 à S3, constituées chacune par un chlorure d'imidazolium, ont été évaluées :
- S1: chlorure de 1-méthylimidazolium ([MIM][CI]),
- S2 : chlorure de 1-butyl-3-méthylimidazolium ([BMIM][CI]), et
- S3 : chlorure de 1-hexyl-3-méthylimidazolium ([HMIM][CI]).

Les essais de dissolution électrochimique ont été réalisés sous atmosphère inerte d'argon, à l'aide d'une boîte à gants et à une température de travail de 100 °C, deux des liquides ioniques étudiés ayant des températures de fusion supérieures à la température ambiante. La température est maintenue constante à 100 °C par chauffage à l'aide d'un bain sec.

### Protocole de l'étude de dissolution électrochimique

Le protocole mis en oeuvre dans le cadre de l'étude de la dissolution électrochimique de l'anode en platine va être décrit en relation avec la solution électrolytique S2 ([BMIM][CI]).

Au préalable, une étude voltampérométrique du système a été réalisée afin de déterminer le potentiel d'oxydation du platine.

En se reportant à la figure 1 illustrant l'évolution de la courbe intensité I en fonction du potentiel E, à une vitesse de balayage Vb = 20 mV/s, du platine dans la solution électrolytique S2 à une température de 100 °C, on observe l'apparition d'un courant d'oxydation à partir de 0,8 V vs Ag^{+I}/Ag, courant qui correspond à l'oxydation des chlorures ainsi qu'à l'oxydation du platine suivant la surtension appliquée.

La dissolution électrochimique de l'anode en platine dans la solution électrolytique S2 a donc été réalisée, sous contrôle potentiostatique, c'est-à-dire en appliquant un potentiel fixe, situé au-delà de 0,8 V vs Ag^{+I}/Ag, en l'espèce sous l'application d'une surtension de 1,4 V vs Ag^{+I}/Ag.

La figure 2 illustre le chronoampérogramme tel qu'obtenu lors de la dissolution électrochimique de l'anode en platine dans la solution électrolytique S2, à température de 100 °C, la quantité d'électricité Q fournie étant de 30 C.

À la fin de la chronoampérométrie, l'anode de platine est extraite de la solution électrolytique S2' ainsi obtenue, puis pesée. La solution électrolytique S2' est, quant à elle, analysée par Spectrométrie d'Absorption Atomique (abrégée SAA), de manière à déterminer la quantité de platine qui a été dissous.

La quantité de platine dosée par SAA est en accord avec la perte de masse de l'anode et correspond à 11 mg. La vitesse de dissolution du platine est également déterminée et donnée dans le tableau 1 ci-dessous.

Il est précisé qu'un essai de dissolution, réalisé par chronopotentiométrie avec le même système mais en appliquant, non plus une surtension fixe mais une intensité fixe, donne un résultat similaire à celui obtenu par chronoampérométrie.

### Résultats de l'étude de dissolution électrochimique

Le protocole qui vient d'être décrit a été reproduit avec les deux autres solutions électrolytiques S1 et S3.

Les conditions opératoires et résultats des essais de dissolution électrochimique dans chacune des solutions électrolytiques S1 à S3 sont rassemblés dans le tableau 1 ci-dessous.

**Tableau 1**

| Solution électrolytique | T (°C) | I appliqué (mA) | E moyen (V vs Ag^{+I}/Ag) | Q (C) | Pt dissous | Vitesse de dissolution (mg.h⁻¹.cm²) |
|---|---|---|---|---|---|---|
| S1 | 100 | 6,8 | 1,02 | 30 | oui | 19,3 |
| S2 | 100 | 6,8 | 1,4 | 30 | oui | 16,86 |
| S3 | 150 | 6,8 | 1,14 | 30 | oui | 28,6 |

Il est précisé que la dissolution de l'anode en platine dans la solution électrolytique S3 a été réalisée, non pas à une température de 100 °C, mais à une température de 150 °C, en raison de la formation d'un film bloquant sur l'anode observée pour des températures situées entre 80 °C et 100 °C.

Comme il ressort clairement du tableau 1 ci-dessus, on observe bien la dissolution électrochimique, ou dissolution anodique, du platine dans chacune des trois solutions électrolytiques S1 à S3, la température de travail devant être adaptée au liquide ionique utilisé, pour éviter la formation d'un film bloquant sur l'anode.

### 1.2 Étude de l'électrodéposition du platine dissous dans la solution électrolytique S2

L'étude d'électrodéposition du platine a été réalisée avec une solution électrolytique S2' constituée par le liquide ionique [BMIM][CI] contenant 7,5 mmol/L de platine dissous, cette quantité de platine dissous pouvant être notamment introduite par dissolution électrochimique préalable de platine massif ou d'un déchet d'électrode contenant du platine.

Le dispositif électrolytique utilisé dans le cadre de cette deuxième étude est du même type que celui utilisé au chapitre 1.1, à l'exception de l'électrode de carbone vitreux et de l'électrode de platine massif, qui sont respectivement utilisées en tant qu'électrode de travail (cathode) et contre-électrode (anode).

Au préalable, et comme précédemment pour l'étude de dissolution électrochimique, une étude voltampérométrique a été réalisée afin de déterminer le potentiel à appliquer pour réaliser les essais de dépôt de platine.

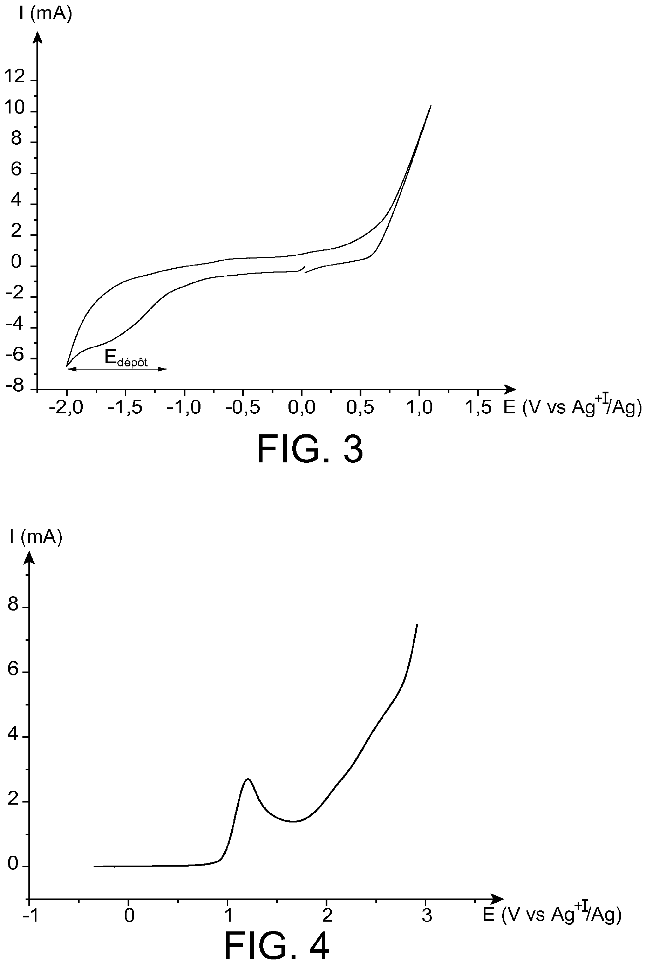

La figure 3 illustre la courbe ainsi obtenue et qui montre l'évolution de la courbe intensité I en fonction du potentiel E, à une vitesse de balayage Vb = 20 mV/s, du système avec la solution électrolytique S2' à une température de 100 °C.

Au vu des données de la figure 3, les essais d'électrodéposition ont été réalisés en fixant un potentiel situé dans la gamme de -1 V vs Ag^{+I}/Ag à -2 V vs Ag^{+I}/Ag.

Or, dans cette gamme, aucun dépôt de platine n'a été obtenu.

Il est donc impossible d'obtenir, sur la cathode de carbone vitreux, l'électrodéposition du platine dissous dans la solution électrolytique S2' qui ne comprend qu'un seul liquide ionique, en l'espèce du [BMIM][CI].

Ce même constat a été obtenu avec les essais d'électrodéposition à partir d'une solution électrolytique S1' constituée par le liquide ionique [MIM][CI] contenant 7,5 mmol/L de platine dissous ou à partir d'une solution électrolytique S3' constituée par le liquide ionique [HMIM][CI] contenant 7,5 mmol/L de platine dissous.

La non faisabilité d'un dépôt électrolytique de platine s'explique par la formation d'un complexe chloré stable qui ne peut être réduit dans le domaine d'électro-activité des liquides ioniques des solutions électrolytiques S1' à S3'.

En conclusion, cet exemple 1 montre que, s'il est possible de dissoudre par voie électrochimique du platine dans une solution électrolytique ne comprenant qu'un seul liquide ionique, il est, par contre, impossible de déposer par cette même voie électrochimique le platine dissous dans ce seul liquide ionique, en raison de la formation d'un complexe trop stable pour pouvoir être réduit.

### EXEMPLE 2 : Solution électrolytique S4 selon l'invention

Les essais de récupération, par dissolution électrochimique et électrodéposition, du platine ont été réalisés en utilisant le même dispositif électrolytique que celui utilisé dans l'exemple 1, le platine massif étant placé en électrode de travail (anode), la contre-électrode (cathode) étant en carbone vitreux et l'électrode de référence étant une électrode Ag^{+I}/Ag.

Les essais ont été réalisés à l'aide d'une boîte à gants, à une température de travail de 100 °C et sous une atmosphère contrôlée, en l'espèce une atmosphère inerte d'argon, avec des teneurs en eau et en oxygène inférieures à 0,5 ppm.

La solution électrolytique testée, notée S4, a été préparée par dissolution d'un premier liquide ionique LI1, en l'espèce du chlorure de 1-butyl-3-méthylimidazolium ([BMIM][CI]) dans un deuxième liquide ionique LI2, en l'espèce du bis(trifluorométhanesulfonyl)imide de 1-butyl-3méthylimidazolium ([BMIM][TFSI]), la concentration molaire de [BMIM][Cl] étant de 0,1 mol/L dans le mélange comprenant LI1 et LI2.

Il est précisé que ce mélange [BMIM][TFSI] + [BMIM][CI] (0,1 mol/L) est liquide à température ambiante.

Une étude voltampérométrique du système mettant en oeuvre la solution électrolytique S4 a été réalisée afin de déterminer le potentiel à appliquer pour réaliser la dissolution électrochimique du platine.

En se reportant à la figure 4 illustrant l'évolution de la courbe intensité I en fonction du potentiel E, à une vitesse de balayage Vb = 20 mV/s, du platine dans la solution électrolytique S4, on observe l'apparition d'un courant d'oxydation à partir de 1,2 V vs Ag^{+I}/Ag, courant qui correspond à l'oxydation des chlorures et du platine. Le signal observé à 3 V vs Ag^{+I}/Ag correspond, quant à lui, à l'oxydation de l'anion TFSI⁻.

L'essai de dissolution électrochimique de l'anode en platine dans la solution électrolytique S4, à température de 100 °C, a donc été réalisé en appliquant un potentiel de 1,2 V vs Ag^{+I}/Ag.

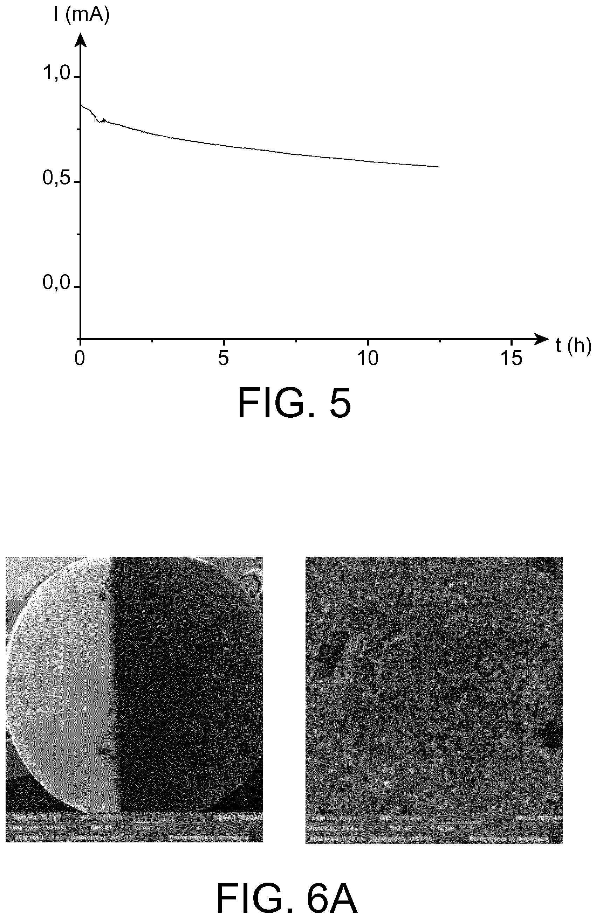

La figure 5 illustre le chronoampérogramme ainsi obtenu, la quantité d'électricité Q fournie étant de 30 C.

L'électrode de platine est ensuite extraite de la solution électrolytique S4, puis pesée de manière à déterminer sa perte en masse. La quantité de platine dissous est de 11,6 mg. Les conditions opératoires ainsi que la vitesse de dissolution sont consignées dans le tableau 2 ci-dessous.

**Tableau 2**

| Solution électrolytique | T (°C) | E appliqué (V vs Ag^{+I}/Ag) | Pt dissous | Vitesse de dissolution (mg.h⁻¹.cm²) |
|---|---|---|---|---|
| S4 | 100 | 1,2 | oui | 1,47 |

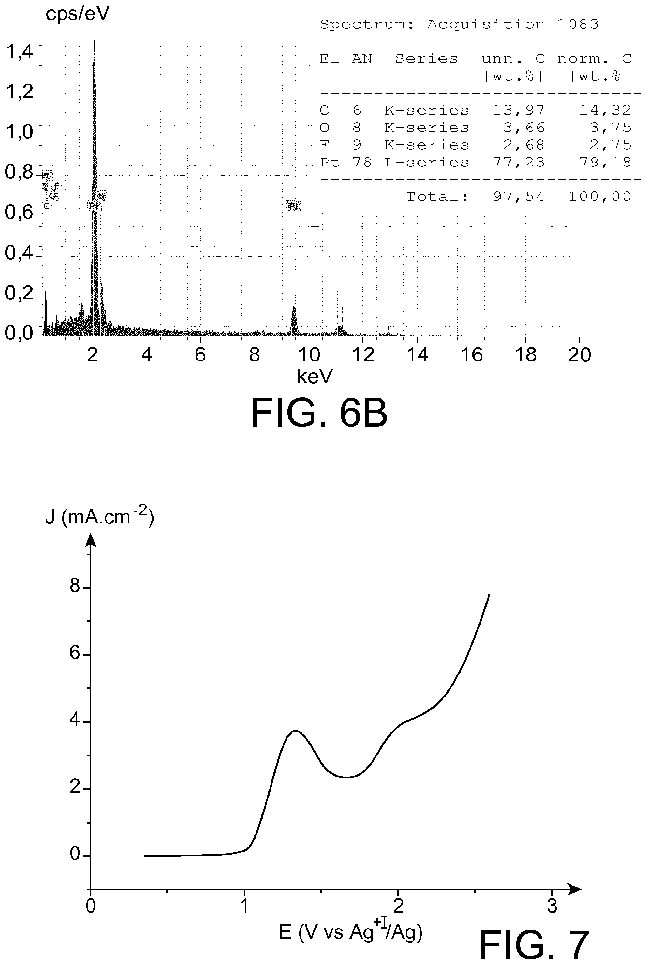

On observe, par ailleurs, l'obtention d'un dépôt à la contre-électrode de carbone vitreux. Ce dépôt a fait l'objet de clichés au moyen d'un microscope électronique à balayage (MEB) ainsi que d'analyses au moyen d'une sonde d'analyse dispersive en énergie (en anglais, energy dispersive X-ray spectrometry et abrégé EDX) afin d'en déterminer la composition chimique. Les résultats de ces clichés MEB et analyses EDX, respectivement présentés aux figures 6A et 6B, montrent que ce dépôt est principalement constitué de platine, avec quelques traces de carbone, de soufre et de fluor provenant de l'anion fluoré TFSI⁻ du liquide ionique [BMIM][TFSI].

Il est donc possible de réaliser, simultanément, dans un dispositif électrolytique unitaire, la dissolution électrochimique ainsi que l'électrodéposition de platine, et donc de récupérer du platine, avec une solution électrolytique comprenant un mélange de deux liquides ioniques [BMIM][TFSI] + [BMIM][CI] (0,1 mol/L) sous atmosphère inerte.

On a également récupéré avec succès du platine par dissolution électrochimique et électrodéposition de platine simultanées, dans les mêmes conditions opératoires, avec les solutions électrolytiques suivantes :
- [BMIM][TFSI] + [BMIM][CI] (0,05 mol/L),
- [BMIM][TFSI] + [HMIM][CI] (0,1 mol/L), et
- [BMIM][TFSI] + [BMIM][Br] (0,1 mol/L).

### EXEMPLE 3 : Solution électrolytique S5 selon l'invention

Les essais de récupération, par dissolution électrochimique et électrodéposition, du platine ont été réalisés à une température de travail de 100 °C, sous une atmosphère non contrôlée, en l'espèce de l'air, en utilisant le même dispositif électrolytique que celui utilisé dans l'exemple 1, le platine massif étant placé en électrode de travail (anode), la contre-électrode (cathode) étant en carbone vitreux et l'électrode de référence étant une électrode Ag^{+I}/Ag.

La solution électrolytique testée, notée S5, comprend un premier liquide ionique LI1, en l'espèce [BMIM][CI], et un deuxième liquide ionique LI2, en l'espèce [BMIM][TFSI], la concentration molaire de [BMIM][CI] étant de 0,05 mol/L dans le mélange comprenant LI1 et LI2.

L'étude voltampérométrique a été préalablement réalisée afin de déterminer le potentiel à fixer pour réaliser la dissolution électrochimique du platine à une température de 100 °C. Le voltampérogramme (Vb = 20 mV/s) obtenu est représenté à la figure 7.

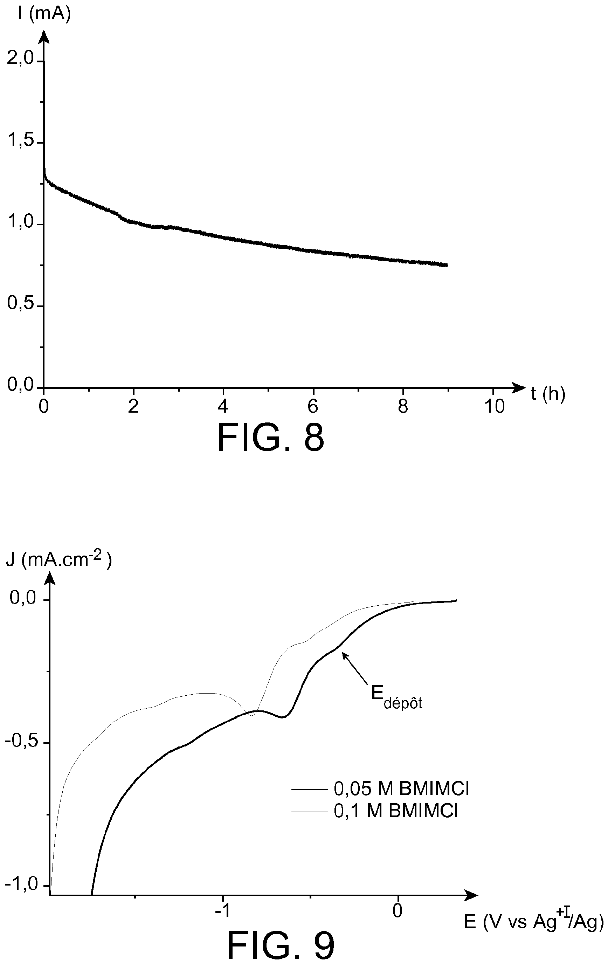

La dissolution électrochimique et l'électrodéposition simultanées ont été réalisées en amorçant, dans un premier temps, la solution par dissolution de l'anode contenant le platine en mode potentiostatique à 1,2 V vs Ag^{+I}/Ag (voir figure 8), puis en réalisant l'étape d'électrodéposition/électrodissolution en simultané, par contrôle potentiostatique de la cathode à -0,32 V vs Ag^{+I}/Ag (voir figure 9).

Après avoir consommé 30 C, on mesure une perte de masse de 11,5 mg de platine sur l'anode, correspondant à une vitesse de dissolution de 1,6 mg.h⁻¹.cm⁻².

On observe également la présence d'un dépôt sur l'électrode de carbone vitreux. Ce dépôt a fait l'objet d'analyses par MEB et EDX afin d'en déterminer la composition chimique.

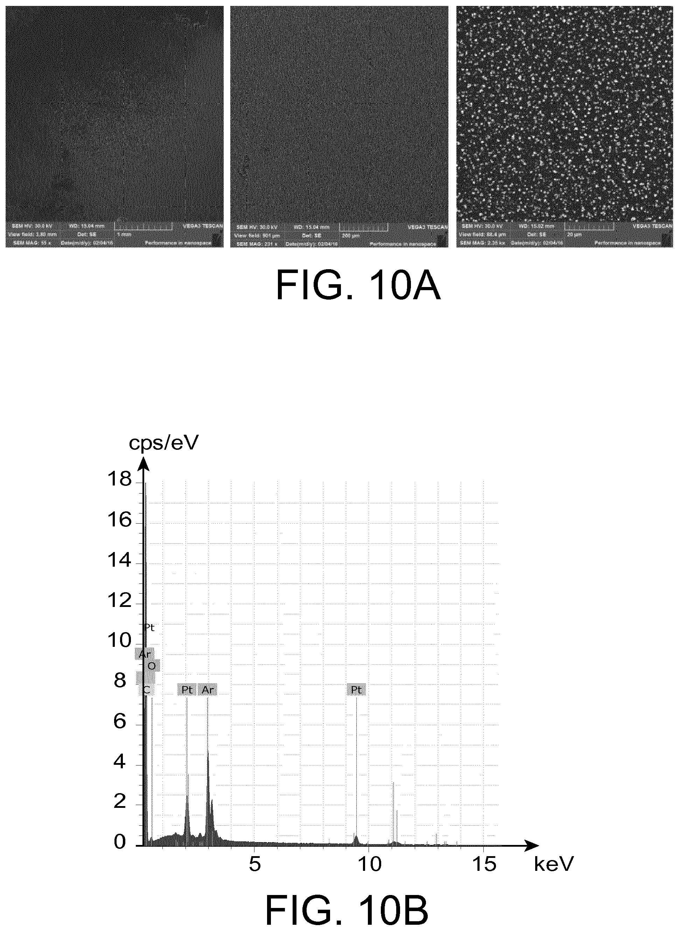

Les résultats de ces analyses, respectivement présentés sur les figures 10A et 10B, montrent que ce dépôt est principalement constitué de platine.

Cet exemple 3 montre qu'il possible de récupérer du platine, par dissolution électrochimique et électrodéposition simultanées de celui-ci, sous une atmosphère non contrôlée telle que l'air, en utilisant une concentration adéquate en premier liquide ionique, ici [BMIM][CI], et en opérant un amorçage de la dissolution électrochimique du platine par alternance du contrôle en potentiel.

L'alternance du contrôle en potentiel permet d'amorcer la dissolution électrochimique (qui se traduit par la présence de platine dissous dans la solution électrolytique) et d'initier un dépôt de platine (en contrôlant le potentiel de la cathode dans un second temps).

### EXEMPLE 4: Essais de récupération à partir d'un déchet d'électrode issu d'AME

Les essais suivants ont été réalisés à partir d'un déchet d'électrode provenant d'un assemblage membrane électrode (AME). Ce déchet d'électrode, d'une surface de 1,44 cm², est composé de nanoparticules de platine supportées sur du carbone, la charge de platine étant de 75 µg/cm².

Ce déchet d'électrode étant électriquement conducteur, il est directement porté en anode du dispositif électrolytique du même type que celui utilisé au chapitre **1.1.** La cathode est, quant à elle, formée par une électrode de carbone vitreux et l'électrode de référence est une électrode Ag^{+I}/Ag.

### 4.1 Essai de récupération avec la solution électrolytique S4'

L'essai est réalisé sous atmosphère contrôlée d'argon à une température de 100 °C avec la solution électrolytique S4' constituée par le mélange [BMIM][TFSI] + [BMIM][CI] (0,1 mol/L) + 7,5 mmol/L de platine dissous, ce platine dissous étant introduit par dissolution électrochimique préalable de platine massif.

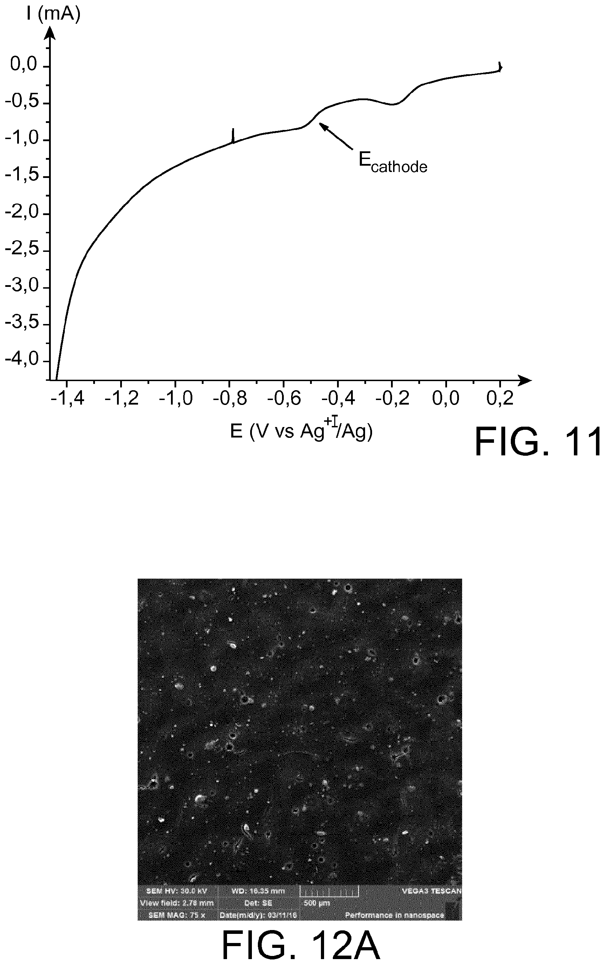

L'étude voltampérométrique, qui a été préalablement réalisée pour déterminer le potentiel à appliquer pour obtenir la dissolution électrochimique des nanoparticules de platine, indique que le potentiel de dépôt est à -0,4 V vs Ag^{+I}/Ag (voir figure 11, Vb = 20 mV/s).

L'essai a donc été réalisé en fixant le potentiel de la cathode de carbone vitreux à -0,5 V vs Ag^{+I}/Ag. La quantité de coulombs appliquée est de 5 C.

À la fin de l'essai, l'anode et la cathode ont été analysées par MEB et EDX afin de contrôler la dissolution électrochimique du platine à l'anode et l'électrodéposition de platine sur la cathode de carbone vitreux.

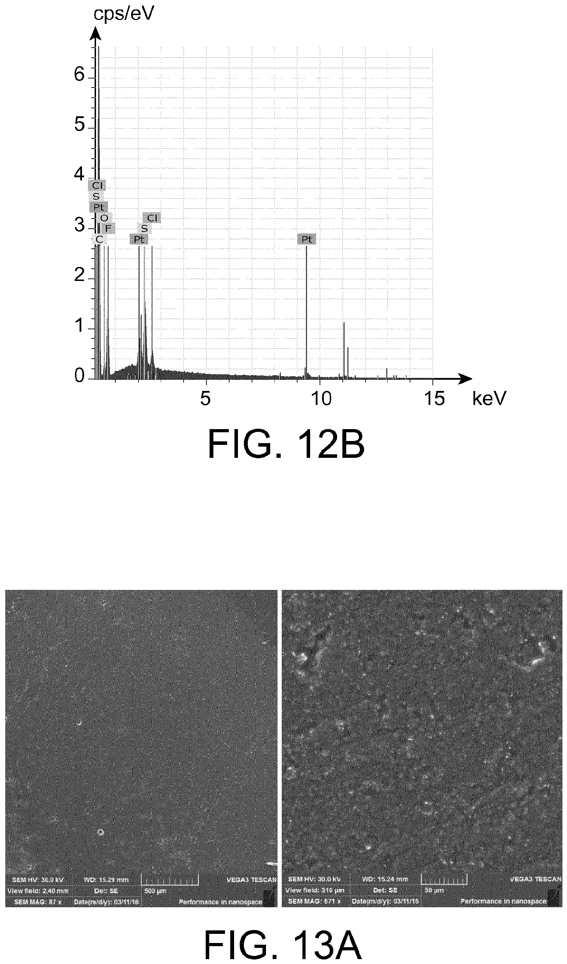

En référence aux figures 12A et 12B, on observe que les analyses MEB et EDX du déchet d'électrode issu de l'AME indiquent une dissolution électrochimique importante du platine à la surface de cette électrode avec quelques particules résiduelles.

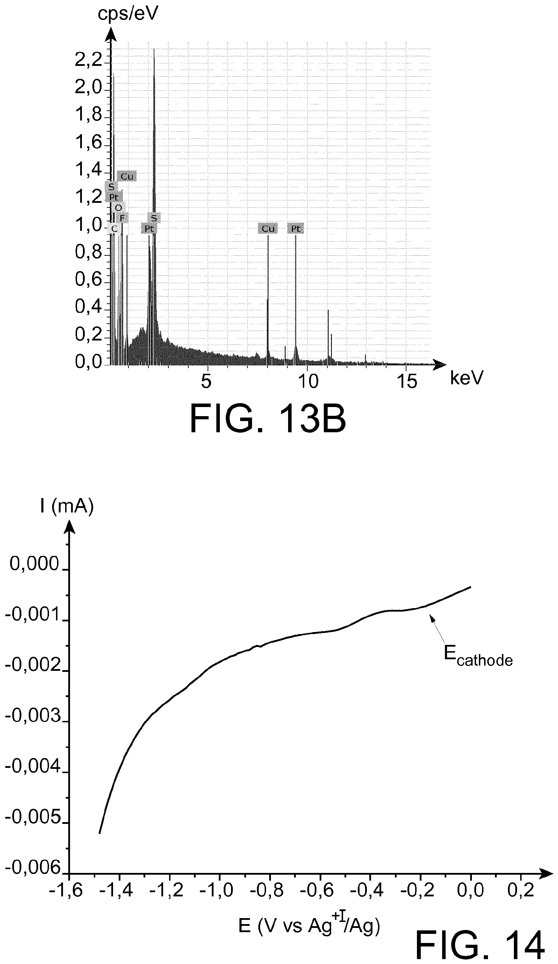

En référence aux figures 13A et 13B, les analyses MEB et EDX de la cathode de carbone vitreux montrent la présence d'un dépôt de platine sur cette électrode, avec quelques traces de cuivre et de soufre.

On peut donc obtenir la dissolution électrochimique ainsi que l'électrodéposition de platine sous atmosphère contrôlée, de manière simultanée, dans une solution électrolytique conforme à l'invention, en amorçant la dissolution électrochimique et l'électrodéposition par l'introduction de faibles quantités de platine dissous dans la solution électrolytique.

### 4.2 Essai de récupération avec la solution électrolytique S5'

L'essai est réalisé sous atmosphère non contrôlée (air) à une température de 100 °C avec la solution électrolytique S5' constituée par le mélange [BMIM][TFSI] + [BMIM][CI] (0,05 mol/L) + 7,5 mmol/L de platine dissous, introduit par dissolution électrochimique préalable de platine massif.

L'étude voltampérométrique, qui a été préalablement réalisée pour déterminer le potentiel à appliquer pour obtenir la dissolution électrochimique des nanoparticules de platine, indique que le potentiel de dépôt est à -0,15 V vs Ag^{+I}/Ag (voir figure 14, Vb = 20 mV/s).

L'essai a donc été réalisé en fixant le potentiel de la cathode de carbone vitreux à -0,5 V vs Ag^{+I}/Ag. La quantité de coulombs appliquée est de 5 C.

À la fin de l'essai, l'anode et la cathode ont été analysées par MEB et EDX afin de contrôler la dissolution électrochimique du platine sur l'anode et l'électrodéposition de platine sur la cathode de carbone vitreux.

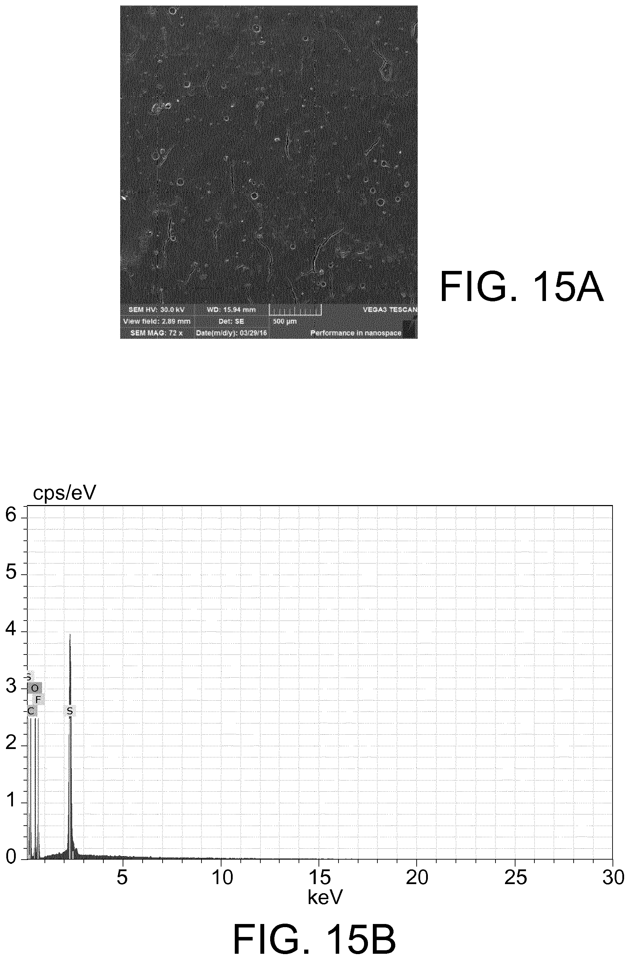

En référence aux figures 15A et 15B, on observe que les analyses MEB et EDX du déchet d'électrode issu de l'AME indiquent une dissolution électrochimique totale du platine à la surface du déchet.

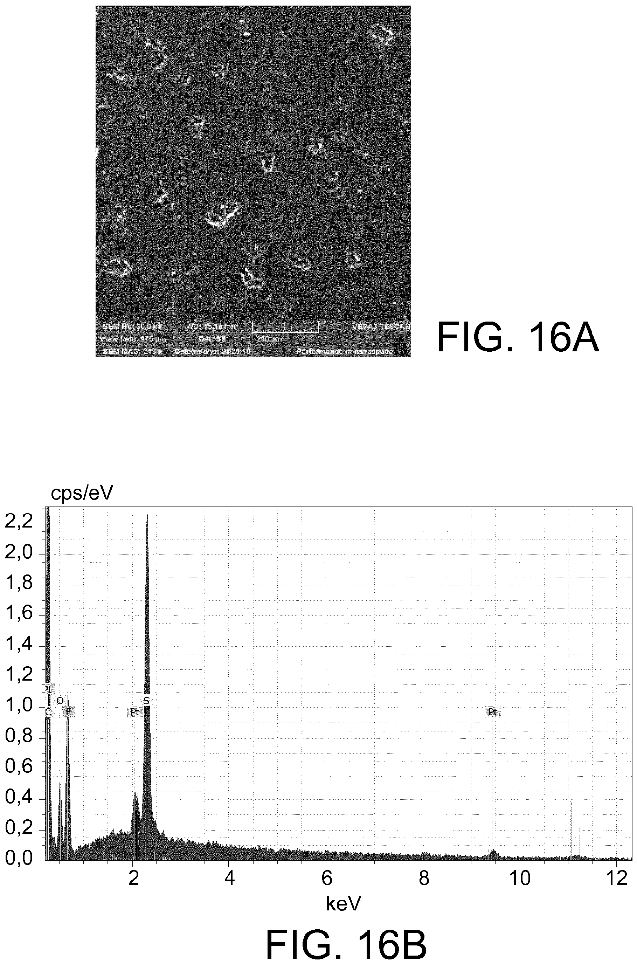

En référence aux figures 16A et 16B, les analyses MEB et EDX de la cathode de carbone vitreux montrent la présence d'un dépôt de platine sur cette électrode, avec quelques traces de soufre provenant de l'anion du deuxième liquide ionique [BMIM][TFSI].

On peut donc obtenir la dissolution électrochimique ainsi que l'électrodéposition de platine simultanément, et donc la récupération de platine, dans une solution électrolytique conforme à l'invention et ce, sous une atmosphère non contrôlée telle que l'air, en amorçant ces dissolution électrochimique et électrodéposition, par l'introduction de faibles quantités de platine dissous dans la solution électrolytique.

### BIBLIOGRAPHIE

**[1]** J.-F. Huang et al., Angew. Chem. Int. Ed., 2012, 51, pages 1684-1688
**[2]** C. Deferm et al., J. Appl. Electrochem., 2013, 43, pages 797-804
**[3]** WO 2006/074523 A1

## Revendications

1. Procédé de récupération de platine à partir d'un matériau dans lequel il est contenu, ce procédé comprenant une étape d'électrolyse conduite dans une solution électrolytique dans laquelle est immergé un système comprenant une électrode positive et une électrode négative et relié à un dispositif permettant de contrôler le potentiel de l'une des deux électrodes positive et négative, avantageusement la différence de potentiel entre les électrodes positive et négative, le matériau étant disposé sur l'électrode positive et la solution électrolytique comprenant un premier liquide ionique LI1, **caractérisé en ce que** LI1 est formé par un premier cation organique et un premier anion inorganique choisi parmi le groupe constitué par les anions halogénures, dicyanamides et thiocyanates, et **en ce que** la solution électrolytique comprend, en outre, un deuxième liquide ionique LI2 formé par un deuxième cation organique et un deuxième anion choisi parmi le groupe constitué par les anions TFSI⁻, FSI⁻, CF₃SO₃⁻, FAP⁻ et BOB⁻, moyennant quoi on récupère le platine sur l'électrode négative.

2. Procédé selon la revendication 1, dans lequel le système comprend, en outre, une électrode de référence, et le dispositif permettant de contrôler le potentiel de l'une des deux électrodes positive et négative est un potentiostat.

3. Procédé selon la revendication 1, dans lequel le dispositif permettant de contrôler la différence de potentiel entre les électrodes positive et négative est une alimentation électrique.

4. Procédé selon l'une quelconque des revendications 1 à 3, dans lequel le premier anion est choisi parmi le groupe constitué par Cl⁻, Br, I⁻ et est, de préférence, Cl⁻ et/ou le deuxième anion est TFSI⁻.

5. Procédé selon l'une quelconque des revendications 1 à 4, dans lequel les premier et deuxième cations organiques sont choisis parmi le groupe constitué par un ammonium, un imidazolium, un pyrrolidinium, un phosphonium, un sulfonium et un pipéridinium.

6. Procédé selon la revendication 5, dans lequel le premier cation organique et/ou le deuxième cation organique est un imidazolium, avantageusement un *N,N*-dialkylimidazolium et, de préférence, le 1-butyl-3-méthylimidazolium.

7. Procédé selon l'une quelconque des revendications 1 à 6, dans lequel les premier et deuxième cations organiques sont identiques.

8. Procédé selon l'une quelconque des revendications 1 à 7, dans lequel la solution électrolytique comprend :
• de 0,5 % mol à 50 % mol du premier liquide ionique LI1, et
• de 50 % mol à 99,5 % mol du deuxième liquide ionique LI2.

9. Procédé selon l'une quelconque des revendications 1 à 8, dans lequel la concentration molaire du premier liquide ionique, dans la solution électrolytique, est comprise entre 0,01 mol/L et 1,5 mol/L, avantageusement entre 0,02 mol/L et 1,0 mol/L, plus avantageusement entre 0,03 mol/L et 0,5 mol/L et, préférentiellement entre 0,05 mol/L et 0,3 mol/L.

10. Procédé selon l'une quelconque des revendications 1 à 9, dans lequel l'électrode positive comprend un matériau choisi parmi le groupe constitué par un métal noble, de l'oxyde d'indium dopé à l'étain, du carbone, de l'acier inoxydable, du tungstène et du titane et/ou l'électrode négative comprend un matériau choisi parmi le groupe constitué par de l'acier inoxydable, du carbone, du titane, de l'aluminium, un métal noble, du tungstène et un oxyde d'indium dopé à l'étain.

11. Procédé selon l'une quelconque des revendications 1 à 10, dans lequel l'étape d'électrolyse est réalisée sous atmosphère d'argon.

12. Procédé selon l'une quelconque des revendications 1 à 11, dans lequel la solution électrolytique comprend, en outre, du platine dissous, le rapport des teneurs molaires en LI1 sur platine [LI1] / [Pt] étant avantageusement compris entre 5 et 100.

13. Procédé selon l'une quelconque des revendications 1 à 12, dans lequel l'étape d'électrolyse est réalisée :
- soit sous un contrôle potentiostatique alternatif, par l'électrode positive puis par l'électrode négative,
- soit en une seule étape, après amorçage de la solution par dissolution de platine.

14. Procédé selon l'une quelconque des revendications 1 à 13, dans lequel le matériau contenant le platine est constitué par un déchet d'électrode, ce déchet d'électrode pouvant provenir d'une pile à combustible telle qu'une pile à combustible à membrane échangeuse de protons.

15. Procédé de récupération de platine contenu dans des électrodes de pile à combustible comprenant des assemblages membrane électrodes et des plaques bipolaires, telle qu'une pile à combustible à membrane échangeuse de protons PEMFC, de préférence usée ou mise au rebut, ce procédé comprenant les étapes successives suivantes :
(a) une étape de séparation des assemblages membrane électrodes et des plaques bipolaires,
(b) une étape de séparation de la membrane et des électrodes de chaque assemblage membrane électrodes séparé à l'étape (a), et
(c) une étape de récupération du platine contenu dans les électrodes par la mise en oeuvre du procédé de récupération de platine selon l'une quelconque des revendications 1 à 14.

## Patentansprüche

1. Verfahren zur Rückgewinnung von Platin aus einem Material, in dem es enthalten ist, wobei das Verfahren einen Elektrolyseschritt umfasst, der in einer Elektrolytlösung durchgeführt wird, in welche ein System eintaucht wird, das eine positive Elektrode und eine negative Elektrode umfasst, verbunden mit einer Vorrichtung, die es ermöglicht, das Potential einer aus positiver und negativer Elektrode zu steuern, vorteilhafterweise die Potentialdifferenz zwischen der positiven und der negativen Elektrode, wobei das Material auf der positiven Elektrode angeordnet ist und die Elektrolytlösung eine erste ionische Flüssigkeit LI1 umfasst, **dadurch gekennzeichnet, dass** LI1 durch ein erstes organisches Kation und ein erstes inorganisches Kation gebildet ist, gewählt aus der Gruppe, umfassend Halogenid-, Dicyanamid- und Thiocyanat-Anionen, und dadurch, dass die Elektrolytlösung ferner eine zweite ionische Flüssigkeit LI2 umfasst, die durch ein zweites organisches Kation und ein zweites Anion gebildet ist, gewählt aus der Gruppe, umfassend die Anionen TFSI⁻, FSI⁻, CF₃SO₃⁻, FAP⁻ und BOB⁻, wodurch Platin an der negativen Elektrode rückgewonnen wird.

2. Verfahren nach Anspruch 1, bei welchem das System ferner eine Referenzelektrode umfasst, und wobei die Vorrichtung, die es ermöglicht, das Potential einer aus positiver und negativer Elektrode zu steuern, ein Potentiostat ist.

3. Verfahren nach Anspruch 1, bei welchem die Vorrichtung, die es ermöglicht, das Potential einer aus positiver und negativer Elektrode zu steuern, eine Stromversorgung ist.

4. Verfahren nach einem der Ansprüche 1 bis 3, bei welchem das erste Anion gewählt wird aus der Gruppe, umfassend Cl⁻, Br, I⁻ und vorzugsweise CL⁻ ist und/oder bei welchem das zweite Anion TFSI⁻ ist.

5. Verfahren nach einem der Ansprüche 1 bis 4, bei welchem das erste und zweite organische Kation gewählt werden aus der Gruppe, umfassend Ammonium, Imidazolium, Pyrrolidinium, Phosphonium, Sulfonium und Piperidinium.

6. Verfahren nach Anspruch 5, bei welchem das erste organische Kation und/oder das zweite organische Kation Imidazolium ist, vorteilhafterweise *N,N*-dialkylimidazolium und bevorzugt 1-butyl-3-methylimidazolium.

7. Verfahren nach einem der Ansprüche 1 bis 6, bei welchem das erste und das zweite organische Kation identisch sind.

8. Verfahren nach einem der Ansprüche 1 bis 7, bei welchem die Elektrolytlösung umfasst:
* 0,5 bis 50 Mol-% der ersten ionischen Flüssigkeit LI1, und
* 50 bis 99,5 Mol-% der zweiten ionischen Flüssigkeit LI2.

9. Verfahren nach einem der Ansprüche 1 bis 8, bei welchem die molare Konzentration der ersten ionischen Flüssigkeit in der Elektrolytlösung 0,01 mol/l bis 1,5 mol/l beträgt, vorteilhafterweise 0,02 mol/l bis 1,0 mol/l, stärker vorteilhafterweise zwischen 0,03 mol/l bis 0,5 mol/l und bevorzugt 0,05 mol/l bis 0,3 mol/l.

10. Verfahren nach einem der Ansprüche 1 bis 9, bei welchem die positive Elektrode ein Material umfasst, welches gewählt ist aus der Gruppe, umfassend Edelmetall, mit Zinn dotiertes Indiumoxid, Carbon, Edelstahl, Wolfram und Titan und/oder bei welchem die negative Elektrode ein Material umfasst, welches gewählt ist aus der Gruppe, umfassend Edelstahl, Carbon, Titan, Aluminium, Edelmetall, Wolfram und mit Zinn dotiertes Indiumoxid.

11. Verfahren nach einem der Ansprüche 1 bis 10, bei welchem der Elektrolyseschritt in einer Argonatmosphäre durchgeführt wird.

12. Verfahren nach einem der Ansprüche 1 bis 11, bei welchem die Elektrolytlösung ferner gelöstes Platin umfasst, wobei das Verhältnis der Molgehalte an LI1 auf Platin [LI1]/[Pt] vorteilhafterweise 5 bis 100 beträgt.

13. Verfahren nach einem der Ansprüche 1 bis 12, bei welchem der Elektrolyseschritt durchgeführt wird
- entweder unter alternativer potenziostatischer Steuerung durch die positive Elektrode und dann die negative Elektrode,
- oder in einem einzigen Schritt nach Auflösen der Lösung durch Lösen von Platin.

14. Verfahren nach einem der Ansprüche 1 bis 13, bei welchem das Material, welches Platin enthält, durch einen Elektrodenabfall gebildet ist, wobei dieser Elektrodenabfall von einer Brennstoffzelle, wie beispielsweise einer Brennstoffzelle mit Protonenaustauschmembran stammen kann.

15. Verfahren zur Rückgewinnung von in Brennstoffzellenelektroden enthaltenem Platin, welches Baugruppen aus Membran-Elektroden-Anordnungen und Bipolarplatten umfasst, wie beispielsweise eine Brennstoffzelle mit Protonenaustauschmembran PEMFC, bevorzugt gebraucht oder entsorgt, wobei das Verfahren die folgenden aufeinanderfolgenden Schritte umfasst:
(a) einen Schritt der Trennung der Membran-Elektroden-Anordnungen und Bipolarplatten,
(b) einen Schritt der Trennung der Membran und der Elektroden jeder in Schritt (a) getrennten Membran-Elektroden-Anordnung, und
(c) einen Schritt der Rückgewinnung des in den Elektroden enthaltenen Platins durch Durchführung des Verfahrens zur Rückgewinnung von Platin nach einem der Ansprüche 1 bis 14.

## Claims

1. A process for recovering platinum from a material in which it is contained, this process comprising an electrolysis step conducted in an electrolytic solution in which a system is submerged, the system comprising a positive electrode and a negative electrode and connected to a device enabling the potential of one of both positive and negative electrodes, advantageously the potential difference between the positive and negative electrodes, to be controlled, the material being disposed on the positive electrode and the electrolytic solution comprising a first ionic liquid LI1, **characterised in that** LI1 is formed by a first organic cation and a first inorganic anion chosen from the group consisting of halide, dicyanamide and thiocyanate anions, and **in that** the electrolytic solution further comprises a second ionic liquid LI2 formed by a second organic cation and a second anion chosen from the group consisting of TFSI⁻, FSI⁻, CF₃SO₃⁻, FAP⁻ and BOB⁻ anions, whereby platinum is recovered on the negative electrode.

2. The process according to claim 1, wherein the system further comprises a reference electrode, and the device enabling the potential of one of both positive and negative electrodes to be controlled is a potentiostat.

3. The process according to claim 1, wherein the device enabling the potential difference between the positive and negative electrodes to be controlled is an electric power supply.

4. The process according to any of claims 1 to 3, wherein the first anion is chosen from the group consisting of Cl⁻, Br, I⁻ and is preferably Cl⁻ and/or the second anion is TFSI⁻.

5. The process according to any of claims 1 to 4, wherein the first and second organic cations are chosen from the group consisting of ammonium, imidazolium, pyrrolidinium, phosphonium, sulphonium and piperidinium.

6. The process according to claim 5, wherein the first organic cation and/or the second organic cation is imidazolium, advantageously *N,N*-dialkylimidazolium and, preferably, 1-butyl-3-methylimidazolium.

7. The process according to any of claims 1 to 6, wherein the first and second organic cations are identical.

8. The process according to any of claims 1 to 7, wherein the electrolytic solution comprises:
• from 0,5% mol to 50% mol of the first ionic liquid LI1, and
• from 50% mol to 99,5% mol of the second ionic liquid LI2.

9. The process according to any of claims 1 to 8, wherein the molar concentration of the first ionic liquid, in the electrolytic solution, is between 0,01mol/L and 1,5mol/L, advantageously between 0,02mol/L and 1,0mol/L, more advantageously between 0,03mol/L and 0,5mol/L, and preferentially between 0,05mol/L and 0,3mol/L.

10. The process according to any of claims 1 to 9, wherein the positive electrode comprises a material chosen from the group consisting of a noble metal, tin-doped indium oxide, carbon, stainless steel, tungsten and titanium and/or the negative electrode comprises a material chosen from the group consisting of stainless steel, carbon, titanium, aluminium, a noble metal, tungsten and a tin-doped indium oxide.

11. The process according to any of claims 1 to 10, wherein the electrolysis step is made under argon atmosphere.

12. The process according to any of claims 1 to 11, wherein the electrolytic solution further comprises dissolved platinum, the ratio of molar contents of LI1 to platinum [LI1]/[Pt] being advantageously between 5 and 100.

13. The process according to any of claims 1 to 12, wherein the electrolysis step is made:
- either under an alternate potentiostatic control, by the positive electrode and then by the negative electrode,
- or in a single step, after triggering the solution by dissolving platinum.

14. The process according to any of claims 1 to 13, wherein the material containing platinum consists of an electrode waste, wherein this electrode waste can come from a fuel cell such as a proton exchange membrane fuel cell.

15. A process for recovering platinum contained in electrodes of a fuel cell comprising membrane electrodes assemblies and bipolar plates, such as a proton exchange membrane fuel cell PEMFC, preferably a used or discarded one, this process comprising the following successive steps:
(a) a step of separating the membrane electrodes assemblies and the bipolar plates,
(b) a step of separating the membrane and the electrodes of each membrane electrodes assembly separated in step (a), and
(c) a step of recovering platinum contained in the electrodes by implementing the process for recovering platinum according to any of claims 1 to 14.
